# FASCICULE DE BREVET EUROPEEN

(11) **EP 2 684 848 B1**
(45) Date de publication et mention de la délivrance du brevet: **01.06.2016**
(21) Numéro de dépôt: 13176411.0
(22) Date de dépôt: 12.07.2013
(51) Int. Cl.: C02F 1/00, C02F 1/66, C02F 103/44

(54) **Installation de lavage et de recyclage d'eau chargee de gravats**
Vorrichtung zum Waschen und Rückführen von Baustellenabwasser
System for cleaning and for recycling of water on building sites

(30) Priorité: 13.07.2012 FR 1256809
(43) Date de publication de la demande: 15.01.2014
(73) Titulaire: Topelet, Laurent, 69745 Genas Cedex (FR); Thomas, Jean, 69420 Ampius (FR)
(72) Inventeur: Topelet, Laurent, 69745 Genas Cedex (FR); Thomas, Jean, 69420 Ampius (FR)
(74) Mandataire: Guérin, Jean-Philippe

(56) Documents cités:
- EP-A1- 2 221 434
- FR-A1- 2 860 785
- FR-A1- 2 969 930
- FR-A1- 2 969 997
- US-A1- 2007 017 862
- US-A1- 2012 024 328
- US-B1- 7 479 225

## Description

L'invention concerne le lavage d'outils présentant d'importantes souillures, et en particulier le traitement de l'eau issue du lavage de tels outils.

En particulier sur les chantiers, il est nécessaire de procéder à la maintenance des outils utilisés, par exemple des bétonneuses, des pelles ou des rampes de dévidage de béton pour les maintenir en état et maximiser leur durée de vie. La maintenance de tels outils fait généralement appel à l'application d'eau sous pression pour retirer les gravats, les résidus de béton ou la laitance de béton.

Ces eaux se chargent de matières en suspension, de boues, de gravats, de cailloux, voire d'hydrocarbures. De plus, les eaux ayant été en contact avec du béton frais ou du ciment deviennent alcalines (pH > 9) et peuvent contenir des métaux toxiques et des substances polluantes dissoutes (adjuvants).

L'évacuation de ces eaux nécessite donc impérativement un prétraitement, afin de minimiser les atteintes à l'environnement (sols, cours d'eau) ou aux infrastructures (réseaux de canalisation, stations d'épuration). Il est donc nécessaire d'installer une installation de traitement des eaux sur le lieu d'un chantier.

Une installation fréquemment utilisée sur un chantier inclut une benne que l'on met en place après avoir ménagé une excavation dans le sol. Une piste en béton est ménagée à proximité de la benne, soit pour positionner une bétonnière, soit pour positionner un camion à toupie dont on souhaite laver une partie. L'eau ruisselle sur la piste jusque dans la benne. Les gravats, la laitance et les impuretés sédimentent vers le fond de la benne. Une pompe récupère l'eau en surface afin de pomper une eau peu chargée en impuretés. La pompe refoule l'eau dans une installation de filtration, permettant de retirer les particules en suspension de l'eau et permettant ainsi de rejeter cette eau à l'égout. Lorsque la benne contient une quantité importante de gravats ou d'impuretés, celle-ci est extraite pour être vidée en décharge et remplacée par une benne vide.

Une installation présente un certain nombre d'inconvénients. D'une part, la mise en place de la benne nécessite une excavation, qui rajoute au coût du chantier et qui s'avère parfois délicate à réaliser, du fait de la présence de câbles ou canalisations dont l'emplacement est parfois mal connu. D'autre part, une telle excavation s'avère parfois impossible à réaliser, en particulier pour le chantier en centre-ville du fait d'un espace limité. La réalisation d'une piste s'avère souvent délicate en centre-ville, les pouvoirs publics exigeants la remise en état de la voirie en fin de chantier, alors que du béton a pu être déposé sur celle-ci et nécessiter une réfection délicate de celle-ci. Par ailleurs, le pompage des eaux de la benne ne peut pas être réalisé avant que l'on ait atteint un certain niveau, et avant que l'on ait décanté, sous peine de boucher ou de détériorer la pompe. En outre, la consommation d'eau sur un chantier est conséquente. On estime par exemple que le nettoyage d'une bétonnière de 1m³ nécessite environ 200 à 300 litres d'eau.

Le document EP2221434 décrit une installation combinée de lavage des matériels de chantiers et de traitement suivi d'un recyclage des eaux de lavage, ladite installation comprenant une passerelle surplombant une structure disposée devant elle, qui forme un volume libre agencé pour recevoir et y maintenir une benne à nettoyer. La structure surplombe un bac de rétention et de décantation des eaux de lavage, l'installation comprenant également une armoire technique équipée d'une alimentation électrique, d'un pistolet de lavage sous pression, d'une pompe de relevage et une unité de traitement des eaux de lavage disposée entre la pompe de relevage et le pistolet de lavage.

Le document US2007/0017862 décrit une installation de lavage de pneus par projection d'eau recyclée à haute pression. L'installation comporte une zone de lavage relevée munie de zones de collecte d'eau en dessous. Des têtes de lavage sont disposées le long de chaque côté de la zone de lavage pour une projection d'eau. Les eaux usées sont collectées. Les eaux collectées sont convoyées vers un premier réservoir, puis un second réservoir pour une clarification de l'eau, puis à travers des filtres vers un réservoir de stockage.

Le document US2012/0024328 décrit un conteneur de lavage muni d'un bac de collecte, d'un filtre et d'une pompe. L'eau utilisée lors d'un lavage est filtrée et réutilisée pour rendre le conteneur de lavage autonome.

Le document FR2969930 décrit une installation de lavage comportant un bac de récupération des eaux de lavage surélevé. Ce bac est connecté par un chenal d'écoulement gravitaire à un autre bac en contrebas. Un filtre est disposé en sortie de chenal pour filtrer les déchets à leur entrée dans l'autre bac.

L'invention vise à résoudre un ou plusieurs de ces inconvénients. L'invention porte ainsi sur une installation déplaçable de lavage et de recyclage des eaux de lavage, telle que définie dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une représentation schématique d'une installation de lavage et de recyclage d'eau selon un exemple de mise en oeuvre ;
- la figure 2 est une vue en coupe schématique d'une piste de lavage d'une telle installation ;
- la figure 3 est une vue en perspective d'une première variante d'un poste de filtration de gravats ;
- la figure 4 est une vue en coupe schématique d'une deuxième variante d'un poste de filtration de gravats ;
- la figure 5 est une vue en coupe schématique d'un exemple de poste de filtration d'eau.

L'invention propose une installation déplaçable pour le lavage et le recyclage des eaux de lavage, en particulier pour des chantiers mettant en oeuvre du béton. L'installation comporte avantageusement trois modules indépendants et déplaçables, afin de réduire les contraintes de mise en place liée à l'espace disponible sur un chantier. L'installation comporte une piste de lavage posée sur le sol, munie d'une surface de ruissellement pour recevoir des eaux de lavage d'outillages chargés en gravats, d'un bac de récupération dont la partie supérieure est disposée au niveau de la surface de ruissellement, et d'une pompe pour aspirer l'eau au fond du bac. L'installation comporte en outre un poste déplaçable de filtration des gravats muni d'un support pour la fixation d'un sac filtrant et recevant l'eau pompée dans le bac, et d'un caisson de récupération placé à l'aplomb du support pour collecter l'eau provenant du sac filtrant. L'installation comporte par ailleurs un poste de filtration d'eau déplaçable, configuré pour récupérer l'eau provenant du caisson, et comprenant un circuit d'eau incluant en série, un filtre et un réservoir de réception de l'eau filtrée. Une interface de sortie permet de délivrer de l'eau sous pression provenant du réservoir.

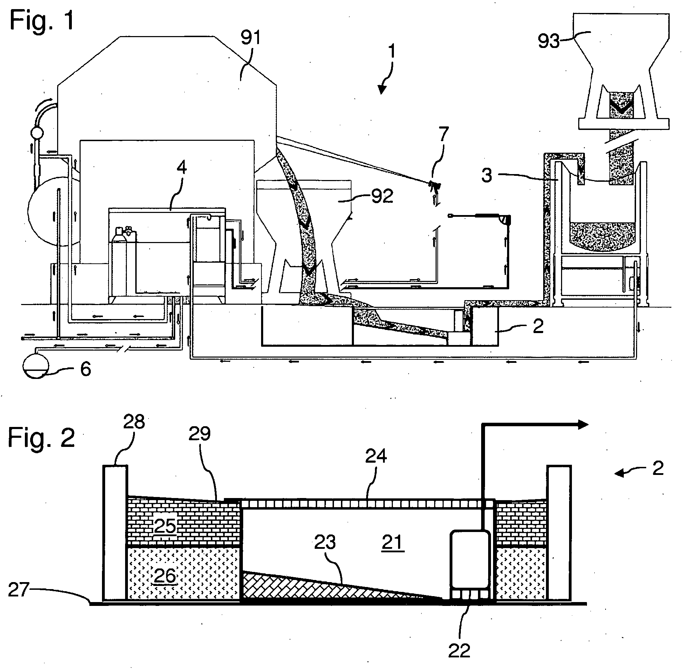

La figure 1 est une représentation schématique d'un mode de réalisation d'une installation de lavage et de recyclage d'eau 1 mise en place sur un chantier. L'installation 1 comporte une piste de lavage 2, un poste de filtration de gravats 3 et un poste de filtration d'eau 4.

La piste de lavage 2 peut être accolée à différentes zones à nettoyer, être rendue accessible par des véhicules, ou rendue accessible par des personnes souhaitant nettoyer leur outillage. Le nettoyage des matériels tels que les malaxeurs de centrale à béton, bennes, toupies béton, banches, et tous types d'accessoires de chantier liés au béton peut ainsi être réalisé à l'eau à l'aplomb de la piste de lavage 2. Dans l'exemple illustré, le chantier fait appel à une centrale à béton 91, et à des malaxeurs 92 et 93, disposés à proximité de l'installation 1.

L'eau chargée de gravats, de boues ou de laitance de béton est reçue dans un bac de récupération de la piste de lavage 2, pompée pour être refoulée dans un sac de collecte filtrant du poste déplaçable de filtration des gravats 3, puis envoyée dans le poste déplaçable de filtration d'eau 4. L'eau filtrée par le poste 4 peut être renvoyée sous pression à des outils de nettoyage de chantier 7, être réinjectée dans différents outillages tels que la centrale à béton 91, ou renvoyée vers les égouts 6. L'invention permet ainsi, avec une installation compacte et aisée à déplacer, de collecter automatiquement des déchets tels que des gravats à évacuer, de disposer d'une eau suffisamment filtrée pour son renvoi dans les égouts, ou de limiter la nécessité d'apports d'eau extérieurs.

Une vue en coupe schématique d'une piste de lavage 2 selon un mode de réalisation de l'invention est illustrée à la figure 2. La piste de lavage 2 est posée sur le sol. Par conséquent, la piste de lavage 2 ne nécessite pas de travaux d'excavation sur le chantier. La piste de lavage 2 peut ainsi être mise en place à moindre coût, sans avoir à se soucier d'éventuels passages de câbles ou de canalisations souterraines. La piste de lavage 2 comporte ici un film plastique 27 placé sur le sol, à l'aplomb de la zone recevant la piste de lavage 2. La piste de lavage 2 inclut une surface de ruissellement 29. La surface de ruissellement 29 est ici définie par une fine chape de béton 25. La chape de béton 26 repose sur une épaisseur de sable 26. Le sable 26 repose lui-même sur le film plastique 27. L'utilisation d'un film plastique 27 comme séparation de la piste de lavage 2 par rapport au sol permet de retirer cette piste 2 sans amas de saletés, ce qui permet par exemple d'éviter d'avoir à réaliser une réfection d'une chaussée ou d'un trottoir recevant la piste 2. La surface de ruissellement 29 est ceinturée par un muret 28 formant un rebord limitant les projections de déchets et canalisant l'eau sur la surface de ruissellement 29.

La surface de ruissellement 29 entoure un bac de récupération d'eau 21. La partie supérieure du bac 21 est disposée au niveau de la surface de ruissellement 29, pour collecter l'eau et des déchets provenant de cette surface de ruissellement 29 avec une efficacité maximale et un encombrement réduit. Le bac de récupération d'eau 21 est avantageusement surmonté d'un caillebotis 24, limitant la taille des déchets pouvant pénétrer dans le bac 21. Une pompe 22 est disposée dans le bac 21, pour pomper l'eau du fond de ce bac. Le bac 23 inclut avantageusement un plan incliné 23, favorisant la chute par gravité des déchets dans le bac 21 en direction de la pompe 22. La pompe 22 est avantageusement configurée pour pouvoir pomper de l'eau chargée de gravats et de laitance de béton dans le fond du bac 21. La pompe 22 peut par exemple être une pompe de type vortex, dont le fonctionnement est peu sensible à la présence d'impuretés ou de déchets la traversant. L'orifice d'une telle pompe 22 est avantageusement disposé au fond du bac de récupération 21.

Un bac de récupération d'eau 21 de faible hauteur peut être utilisé, l'utilisation d'une pompe 22 adaptée pour le pompage d'eau chargée de gravats permettant un pompage en continu, sans nécessiter une quelconque décantation. Par conséquent, le volume d'eau devant être stocké en tampon dans le réservoir 21 peut être réduit (par exemple compris entre 150 et 300 litres). Le bac de récupération d'eau 21 comporte avantageusement une hauteur inférieure ou égale à 60 cm. En utilisant un bac de récupération d'eau 21 de faible hauteur, il n'est pas non plus nécessaire de surélever excessivement certains outils devant être lavés, tels que des bétonnières ou des accès pour des camions toupies. Un tel bac 21 peut ainsi aisément être transporté et positionné dans une chape 25 de faible dimension réalisée sur un chantier. Le bac 21 peut à cet effet être pourvu de crochets permettant sa manipulation par des engins tels que des grues.

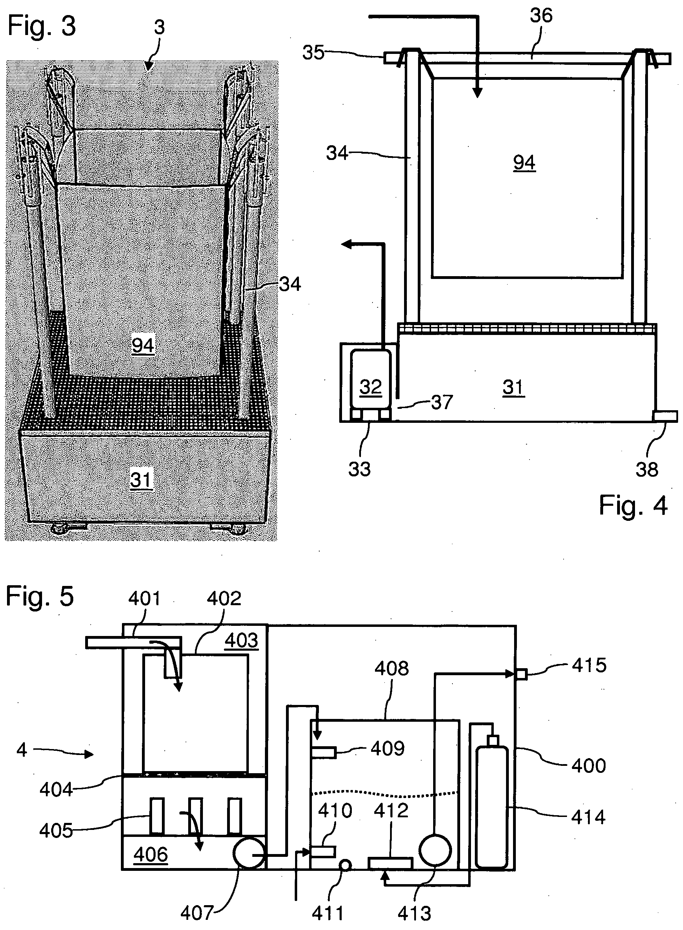

La pompe 22 évacue l'eau pompée vers le poste déplaçable de filtration des gravats 3, dont un mode de réalisation est illustré en perspective à la figure 3. Le poste 3 vise à séparer l'eau des gravats, pour assurer la collecte de chacun d'eux. Le poste de filtration des gravats 3 comprend un support 34 pour la fixation d'un sac filtrant 94. L'eau provenant de la pompe 22 est déversée dans le sac filtrant 94. Le support 34 inclut ici quatre montants métalliques verticaux. Les sangles de fixation du sac filtrant 94 viennent se fixer sur les extrémités supérieures de ces montants pour maintenir le sac 94. Le support 34 permet ainsi de maintenir le sac filtrant 94 à l'aplomb d'un caisson de récupération d'eau 31. Le sac filtrant 94 retient automatiquement les gravats et déchets dépassant une certaine taille et laisse l'eau ruisseler vers le caisson 31. De l'eau déjà filtrée est ainsi collectée par le caisson 31. L'eau collectée dans le caisson 31 est ensuite fournie au poste déplaçable de filtration d'eau 4. Le pompage permet en outre de récupérer automatiquement les déchets et gravats dans le sac 94, pour leur évacuation ultérieure.

La figure 4 est une vue en coupe schématique d'une variante du poste déplaçable de filtration des gravats 3. Le support 34 comprend ici des crochets 35 dans sa partie supérieure, pour recevoir les sangles du sac filtrant 94. Le support 34 comprend en outre un cadre amovible 36 venant s'emboîter aux extrémités des montants du support 34. Cette variante permet une préhension et une évacuation facilitée du sac de filtration 94.

En outre, le poste de filtration des gravats 3 comporte une pompe 32 configurée pour pomper l'eau collectée dans le caisson 31 et la refouler dans le poste 4. La pompe 32 est avantageusement séparée du reste du caisson 31 par une paroi. En l'occurrence, la pompe 32 est disposée dans un réservoir externe 33 distinct du caisson 31. Le réservoir externe 33 communique avec le caisson 31 uniquement par l'intermédiaire d'un orifice inférieur 37. Ainsi, d'éventuels déchets indésirables présents à la surface de l'eau collectée ne sont pas pompés par la pompe 32. Ainsi, de l'huile éventuellement présente à la surface de l'eau dans le caisson 31 peut être retirée par un opérateur. Le caisson 31 comporte avantageusement une vanne de vidange 38 au niveau de son fonds, afin de permettre une évacuation d'eau ou de déchets collectés. Bien que non illustré, le poste 3 peut comporter des anneaux de préhension facilitant son déplacement et sa mise en place par l'intermédiaire d'une grue. Le poste 3 peut également comprendre des roulettes dans sa partie inférieure, pour faciliter son positionnement sur le chantier.

La figure 5 est une vue en coupe schématique d'un exemple de poste de filtration de l'eau 4. Le poste 4 comprend par exemple une vanne à flotteur 401, recevant l'eau collectée dans le caisson 31. La vanne à flotteur 401 est par exemple connectée par une conduite à la pompe 32. La vanne à flotteur 401 déverse l'eau à l'intérieur d'un filtre 402. Le filtre 402 est logé dans un compartiment 403 d'un châssis 400. Si un excédent d'eau se déverse dans le filtre 402, le niveau va ainsi monter jusqu'à couper l'arrivée de l'eau au niveau de la vanne à flotteur 401. La vanne à flotteur 401 comporte avantageusement une tête pivotante pour faciliter la mise en place et le retrait du filtre 402. Le filtre 402 est par exemple un filtre se présentant sous la forme d'un sac ou poche poreux fixé sur un cadre métallique non illustré.

Le filtre 402 peut reposer sur une grille de maintien 404 ménagée à une hauteur intermédiaire dans le compartiment 403. Le fond du compartiment 403 comporte des orifices débouchant sur un réservoir inférieur 406. Les orifices sont surmontés de cartouches de filtration 405, disposées sous la grille 404. Les filtres 405 sont ainsi aisément accessibles pour des opérations de maintenance. Ainsi, l'eau doit nécessairement traverser les filtres 405 pour pouvoir atteindre le réservoir 406. Par conséquent, si le filtre 402 assure une filtration insuffisante ou si l'eau déborde de ce filtre 402, l'eau aura malgré tout été soumise à une filtration suffisante en atteignant le réservoir 406. Le poste 4 comprend en outre une pompe 407 récupérant l'eau du réservoir 406 pour la déverser dans un réservoir 408. Le réservoir 408 est utilisé à la fois pour rapprocher l'eau filtrée d'un pH neutre, pour stocker de l'eau avant son utilisation, pour gérer les apports d'eau provenant du réseau, et pour permettre le vidage de l'eau filtrée vers les égouts.

Une bonbonne 414 de dioxyde de carbone est stockée avantageusement à l'intérieur du châssis 400. La bonbonne 414 est raccordée à un répartiteur 412, ce répartiteur étant disposé dans le fond du réservoir 408. Le répartiteur 412 est destiné à effectuer une introduction appropriée de dioxyde de carbone dans l'eau filtrée, afin de ramener celle-ci avantageusement à un pH compris entre 6,5 et 8,5.

Le réservoir 408 est connecté, par l'intermédiaire d'une pompe ou d'un surpresseur 413 à une interface de sortie 415. L'interface de sortie 415 permet de fournir de l'eau filtrée sous pression pour son utilisation sur le chantier, en permettant ainsi de limiter au maximum les apports d'eau en provenance du réseau. L'interface de sortie 415 peut également permettre la connexion d'outils de nettoyage de chantier 7 pour réutiliser l'eau filtrée pour le lavage au-dessus de la piste de lavage 2. Le réservoir 408 pourra par exemple présenter une capacité comprise entre 300 et 900 litres afin de disposer d'une quantité satisfaisante d'eau filtrée et recyclée.

Le réservoir 408 peut comporter une vanne ou une électrovanne 411 au niveau de sa partie inférieure, afin d'évacuer l'eau filtrée vers les égouts par exemple en fin de chantier. Dans sa partie haute, le réservoir 408 comporte une vanne à flotteur 409. La vanne 409 permet d'interrompre le fonctionnement des pompes 22, 32 ou 407, en présence d'une trop grande quantité d'eau filtrée. La vanne 409 peut également commander l'ouverture d'une électrovanne 411 pour une évacuation de trop plein à l'égout. Dans sa partie basse, le réservoir 408 comporte une vanne à flotteur 410. La vanne 410 fermée de provoquer le déversement d'eaux en provenance du réseau dans le réservoir 408, lorsque le niveau de l'eau dans ce réservoir 408 est inférieur au niveau du flotteur.

Afin de faciliter le positionnement et la mise en place du poste 4, le châssis 400 peut être muni d'anneaux de préhension facilitant son déplacement et sa mise en place par l'intermédiaire d'une grue.

Le châssis 400 peut également intégrer avantageusement l'armoire électrique gérant les fonctionnalités du poste 4 ou de toute l'installation 1.

L'utilisation d'une installation modulaire avec une piste de lavage 3, un poste de filtration de gravats 3 et un poste de filtration d'eau 4 modulaires et mécaniquement indépendants permet de faciliter leur mise en place, pour différentes configurations de chantiers, avec potentiellement une surface disponible assez réduite.

## Revendications

1. Installation (1) déplaçable de lavage et de recyclage des eaux de lavage, **caractérisée en ce qu'**elle comprend :
- une piste de lavage (2) disposée sur le sol et incluant :
- une surface de ruissellement (29) ; et
- un bac de récupération d'eau (21) dont la partie supérieure est disposée au niveau de la surface de ruissellement ;
- une première pompe (22) configurée pour aspirer de l'eau du fond du bac chargée de gravats et de laitance de béton ;
- un poste déplaçable (3) de filtration des gravats, incluant :
- un support (34) pour la fixation d'un sac filtrant (94), ladite première pompe étant configurée pour refouler l'eau dans un sac fixé sur le support;
- un caisson de récupération (31) placé à l'aplomb du support pour collecter l'eau provenant d'un sac filtrant ;
- un poste déplaçable de filtration d'eau (4), configuré pour récupérer l'eau collectée dans le caisson de récupération (31), et comprenant un circuit d'eau incluant en série un filtre (402), un réservoir de réception de l'eau filtrée (408) ;
- une deuxième pompe (413) de mise en pression de l'eau issue du réservoir de réception de l'eau filtrée (408) ;
- une interface de sortie (415) recevant de l'eau sous pression provenant du réservoir de réception ;
- la piste de lavage, le poste de filtration des gravats et le poste de filtration d'eau étant indépendants et déplaçables.

2. Installation selon la revendication 1, dans laquelle la piste de lavage (2) comprend une chape de béton (25) définissant la surface de ruissellement, et comprend un film plastique (27) sur lequel repose la chape de béton.

3. Installation selon la revendication 1 ou 2, dans laquelle le bac de récupération d'eau (21) présente une hauteur inférieure ou égale à 60 cm.

4. Installation selon l'une quelconque des revendications précédentes, dans laquelle ladite première pompe (22) est une pompe vortex dont l'orifice d'aspiration est disposé au niveau du fond du bac de récupération (21).

5. Installation selon l'une quelconque des revendications précédentes, dans laquelle le bac de récupération (21) est surmonté par un caillebotis (24).

6. Installation selon l'une quelconque des revendications précédentes, dans laquelle le poste de filtration des gravats (3) comprend une troisième pompe (32) configurée pour refouler l'eau du caisson de récupération (31) dans le filtre (402) du poste de filtration d'eau, cette troisième pompe (32) comportant un orifice d'aspiration disposé au niveau du fond du caisson de récupération.

7. Installation selon l'une quelconque des revendications précédentes, dans laquelle le poste déplaçable de filtration d'eau inclut une bonbonne (414) de dioxyde de carbone et un circuit de fluide permettant d'injecter le dioxyde de carbone de la bonbonne dans l'eau filtrée.

8. Installation selon l'une quelconque des revendications précédentes, comprenant un raccord de connexion à un réseau d'eau, et dans laquelle le réservoir de réception d'eau filtrée comporte une première vanne à flotteur (410) dans sa partie inférieure commandant l'introduction d'eau provenant du raccord dans le réservoir de réception lorsque le niveau d'eau dans le réservoir descend sous un premier niveau.

9. Installation selon l'une quelconque des revendications précédentes, dans laquelle le réservoir de réception d'eau filtrée comporte une deuxième vanne à flotteur (409) commandant la coupure d'au moins une desdites pompes lorsque le niveau d'eau dans le réservoir monte au-dessus d'un deuxième niveau.

## Patentansprüche

1. Bewegliche Anlage (1) zum Waschen und Rückführen von Abwasser, **dadurch gekennzeichnet, dass** sie umfasst:
- eine Waschspur (2), die am Boden angeordnet ist und einschließt:
- eine Abflussfläche (29); und
- einen Wasserrückführungsbehälter (21), dessen oberer Teil im Bereich der Abflussfläche angeordnet ist;
- eine erste Pumpe (22), die dazu vorgesehen ist, Wasser, das mit Bauschutt und Betonschlamm angereichert ist, vom Boden des Behälters abzusaugen;
- eine bewegliche Filterstation (3) für den Bauschutt, umfassend:
- eine Stütze (34) zur Befestigung eines Filterbeutels (94), wobei die erste Pumpe dazu vorgesehen ist, das Wasser in einen auf der Stütze befestigten Beutel zu befördern;
- einen Rückführungsbehälter (31), der lotrecht zur Stütze angeordnet ist, um das von dem Filterbeutel kommende Wasser zu sammeln;
- eine bewegliche Filterstation (4) für das Wasser, die dazu vorgesehen ist, das in dem Rückführungsbehälter (31) gesammelte Wasser rückzuführen, und umfassend einen Wasserkreislauf, der in Serie einen Filter (402), ein Reservoir für die Aufnahme des gefilterten Wassers (408) umfasst;
- eine zweite Pumpe (413), um das von dem Reservoir zur Aufnahme des gefilterten Wassers (408) kommende Wasser unter Druck zu setzen;
- eine Ausgangsschnittstelle (415), die Wasser unter Druck, das von dem Aufnahmereservoir kommt, aufnimmt;
- wobei die Waschspur, die Filterstation für den Bauschutt und die Filterstation für das Wasser unabhängig und beweglich sind.

2. Anlage nach Anspruch 1, bei der die Waschspur (2) eine Betonschicht (25) umfasst, die die Abflussfläche definiert, und eine Kunststofffolie (27) umfasst, auf der die Betonschicht liegt.

3. Anlage nach Anspruch 1 oder 2, bei der der Wasserrückführungsbehälter (21) eine Höhe kleiner oder gleich 60 cm aufweist.

4. Anlage nach einem der vorhergehenden Ansprüche, bei der die erste Pumpe (22) eine Freistrompumpe ist, deren Ansaugöffnung im Bereich des Bodens des Rückführungsbehälters (21) angeordnet ist.

5. Anlage nach einem der vorhergehenden Ansprüche, bei der über dem Rückführungsbehälter (21) ein Gitterrost (24) montiert ist.

6. Anlage nach einem der vorhergehenden Ansprüche, bei der die Filterstation für den Bauschutt (3) eine dritte Pumpe (32) umfasst, die dazu vorgesehen ist, das Wasser von dem Rückführungsbehälter (31) in den Filter (402) der Filterstation für das Wasser zu befördern, wobei diese dritte Pumpe (32) eine Ansaugöffnung umfasst, die im Bereich des Bodens des Rückführungsbehälters angeordnet ist.

7. Anlage nach einem der vorhergehenden Ansprüche, bei der die bewegliche Filterstation für das Wasser eine Kohlendioxidflasche (414) und einen Fluidkreislauf einschließt, der es ermöglicht, das Kohlendioxid von der Flasche in das gefilterte Wasser einzuleiten.

8. Anlage nach einem der vorhergehenden Ansprüche, umfassend einen Anschluss an ein Wassernetz, und bei der das Reservoir für die Aufnahme von gefiltertem Wasser ein erstes Schwimmerventil (410) in seinem unteren Teil umfasst, das die Einleitung von Wasser, das von dem Anschluss kommt, in das Aufnahmereservoir steuert, wenn der Wasserstand in dem Reservoir unter ein erstes Niveau absinkt.

9. Anlage nach einem der vorhergehenden Ansprüche, bei der das Reservoir für die Aufnahme von gefiltertem Wasser ein zweites Schwimmerventil (409) umfasst, das die Abschaltung mindestens einer der Pumpen steuert, wenn der Wasserstand in dem Reservoir über ein zweites Niveau steigt.

## Claims

1. Movable facility (1) for washing and recycling washing waters, **characterized in that** it comprises:
- a washing track (2) positioned on the ground and including:
- a run-off surface (29); and
- a water recovery tank (21), the upper part of which is positioned level with the run-off surface;
- a first pump (22) configured in order to suck up water from the bottom of the tank that is laden with rubble and concrete laitance;
- a movable rubble filtration station (3), including:
- a support (34) for fastening a filter bag (94), said first pump being configured in order to discharge the water into a bag fastened to the support;
- a recovery chamber (31) placed in a vertical line with the support in order to collect the water originating from a filter bag;
- a movable water filtration station (4), configured to recover the water collected in the recovery chamber (31), and comprising a water circuit that includes, in series, a filter (402), and a filtered water receiving reservoir (408);
- a second pump (413) for pressurizing the water from the filtered water receiving reservoir (408);
- an outlet interface (415) receiving pressurized water originating from the receiving reservoir;
- the washing track, the rubble filtration station and the water filtration station being independent and movable.

2. Facility according to Claim 1, in which the washing track (2) comprises a concrete covering (25) defining the run-off surface, and comprises a plastic film (27) on which the concrete screed rests.

3. Facility according to Claim 1 or 2, in which the water recovery tank (21) has a height of less than or equal to 60 cm.

4. Facility according to any one of the preceding claims, in which said first pump (22) is a vortex pump, the suction orifice of which is positioned level with the bottom of the recovery tank (21).

5. Facility according to any one of the preceding claims, in which the recovery tank (21) is surmounted by a grating (24).

6. Facility according to any one of the preceding claims, in which the rubble filtration station (3) comprises a third pump (32) configured in order to discharge the water from the recovery chamber (31) into the filter (402) of the water filtration station, this third pump (32) comprising a suction orifice positioned level with the bottom of the recovery chamber.

7. Facility according to any one of the preceding claims, in which the movable water filtration station includes a cylinder (414) of carbon dioxide and a fluid circuit that makes it possible to inject carbon dioxide from the cylinder into the filtered water.

8. Facility according to any one of the preceding claims, comprising a coupling to a water system, and in which the filtered water receiving reservoir comprises a first float valve (410) in its lower part that controls the introduction of water originating from the coupling into the receiving reservoir when the water level in the reservoir drops below a first level.

9. Facility according to any one of the preceding claims, in which the filtered water receiving reservoir comprises a second float valve (409) that controls the shutting-off of at least one of said pumps when the water level in the tank rises above a second level.
